# EUROPEAN PATENT SPECIFICATION

(11) **EP 3 987 919 B1**
(45) Date of publication and mention of the grant of the patent: **05.07.2023**
(21) Application number: 21202394.9
(22) Date of filing: 13.10.2021
(51) Int. Cl.: A01G 13/02, A01G 9/16, A01G 9/22

(54) **A PROTECTIVE STRUCTURE FOR ROWS OF PLANTS AND THE LIKE**
SCHUTZSTRUKTUR FÜR PFLANZENREIHEN UND ÄHNLICHES
STRUCTURE DE PROTECTION POUR RANGÉES DE PLANTES ET ANALOGUES

(30) Priority: 14.10.2020 IT 202000024211
(43) Date of publication of application: 27.04.2022
(73) Proprietor: Garda Wire S.r.l., 38067 Ledro (TN) (IT)
(72) Inventor: TIBONI, Fabio, 38067 Ledro (TN) (IT)
(74) Representative: Simino, Massimo

(56) References cited:
- EP-A1- 3 248 455
- US-A- 4 387 533
- US-A1- 2017 238 477

## Description

### Field of the invention

The present invention relates to a protective structure for rows of plants as defined in the preamble of claim 1, in particular a protective structure for protecting fruit trees from atmospheric phenomena such as hail, as well as from overexposure to the sun, insects and the like.

For simplicity, the present description is made without limitation with specific reference to a protective structure for protecting fruit trees from hail, but the same considerations also apply to a protective structure for protecting fruit trees or other plants, from the other elements as mentioned above.

### Background of the invention

In the field of agricultural production, fruit trees are arranged in parallel rows which are suitably spaced apart to allow the passage of people walking or agricultural machines.

These rows extend to a length of many meters, for example even to 50 or 100 meters, and the fruit trees are pruned and grown while maintaining the spacing between rows.

Fruit trees should be provided with a protective structure to preserve the production of fruits from possible hailstorms, i.e. from atmospheric conditions that tend to occur just when the fruits are ripe or ripening.

A hailstorm may apparently cause considerable damage, because it can cause the ripening fruits to fall or can bruise them and make them unsuitable for sale.

In order to obviate this drawback, anti-hail nets have been widely used to cover fruit trees and protect them from hail.

The application and subsequent removal of anti-hail nets is a rather complex operation, both because the net can get caught in the branches and because it is time-consuming and labor-intensive.

US 2017/238477 A1 relates to an automated rolling greenhouse cover comprising an upper current from which two motorized side rolling covers, i.e. left and right covers, roll down onto the supporting structure of a greenhouse. Therefore, the cover necessarily requires the provision of a greenhouse supporting structure which extends along the entire row and obstructs the passage between two rows of crops.

In an attempt to obviate these drawbacks, systems of anti-hail protective structures has been provided, that can facilitate protection of fruit trees with anti-hail sheets and later removal of the latter when it is not needed. However, these systems have proved to be laborious and unsuitable to be automated even for rows of plants as short as 50 meters.

In view of the foregoing, the need is apparently felt for a protective structure for rows of plants and the like, in particular a protective structure suitable to ensure protection of plants from weather conditions such as hail, overexposure to the sun or insects and the like, which also affords easy application and removal, as needed, quickly and with reduced labor requirements.

### Summary of the invention

This invention is based on the problem of providing a protective structure for rows of plants and the like which has such structural and functional characteristics as to fulfill the above need, while obviating the above prior art drawbacks.

This problem is solved by a protective structure for rows of plants and the like as defined in claim 1.

### Brief description of the figures

Further features and advantages of the protective structure for rows of plants and the like of the present invention will be apparent upon reading the following description of one preferred embodiment thereof, which is given by way of illustration and without limitation with reference to the accompanying figures, in which:
- Figures 1 and 2 show respective simplified perspective views of a protective structure of the invention according to a first embodiment;
- Figures 3 and 4 show two details of the protective structure of Figures 1 and 2;
- Figures 5 and 6 show perspective views of a movable winch of the protective structure of Figures 1 and 2;
- Figure 7 shows respective simplified perspective views of a protective structure of the invention of a second embodiment and
- Figure 8 show a detail of one head end of the protective structure of Figure 7.

### Detailed description of invention

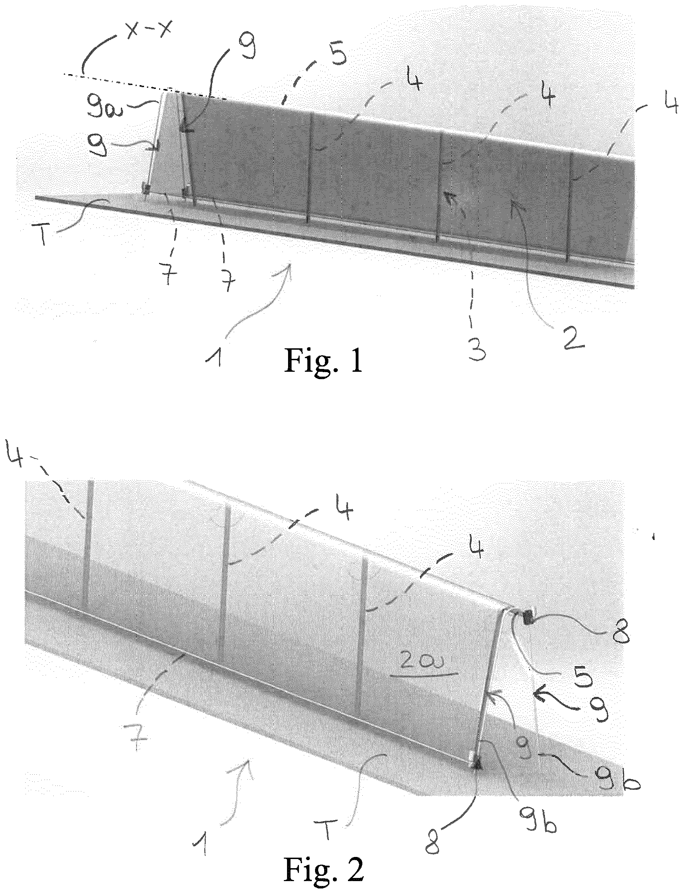

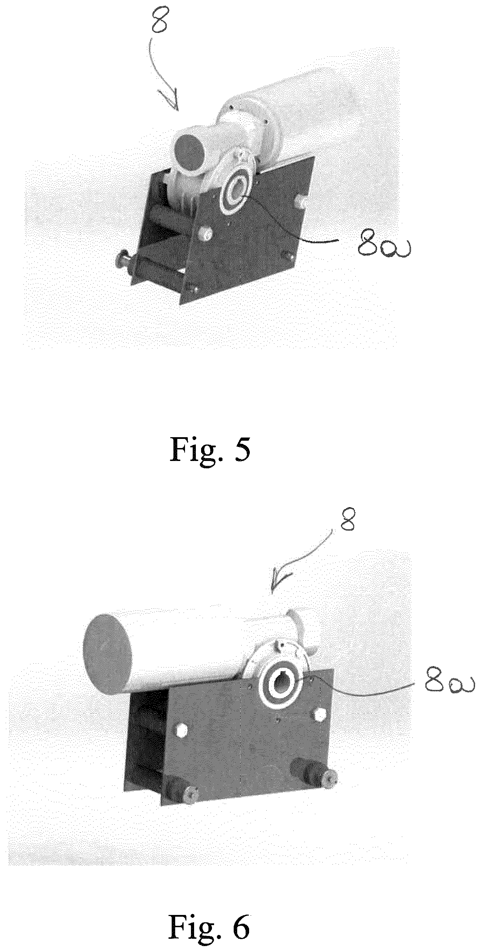

Referring to Figures 1 to 6, a protective structure of the invention for rows of plants and the like (not shown) is generally designated by numeral 1.

The protective structure 1 comprises a flexible covering protective element 2 and a supporting structure 3 for supporting said covering protective element 2 above a row of plants to be protected and along the sides of such row.

In particular, the aforementioned support structure 3 comprises a plurality of support poles 4 to support at a predetermined height from the ground at least one upper bar 5 extended along a prevalent longitudinal direction X- X. In use the aforementioned upper bar 5 is intended to be extended along the row of plants to be protected and above the tops of the plants of the row.

Preferably, the aforementioned upper bar 5 is defined by a ridge wire, for example made of steel or another material, suitably tensioned to support the covering protective element 2.

The covering protective element 2 preferably consists of a net and/or a film, preferably made of plastic.

The covering protective element 2 comprises a first portion 2a which extends:
- longitudinally along the upper bar 5 and
- transverse to said bar from said upper bar 5 to proximity to the ground T.

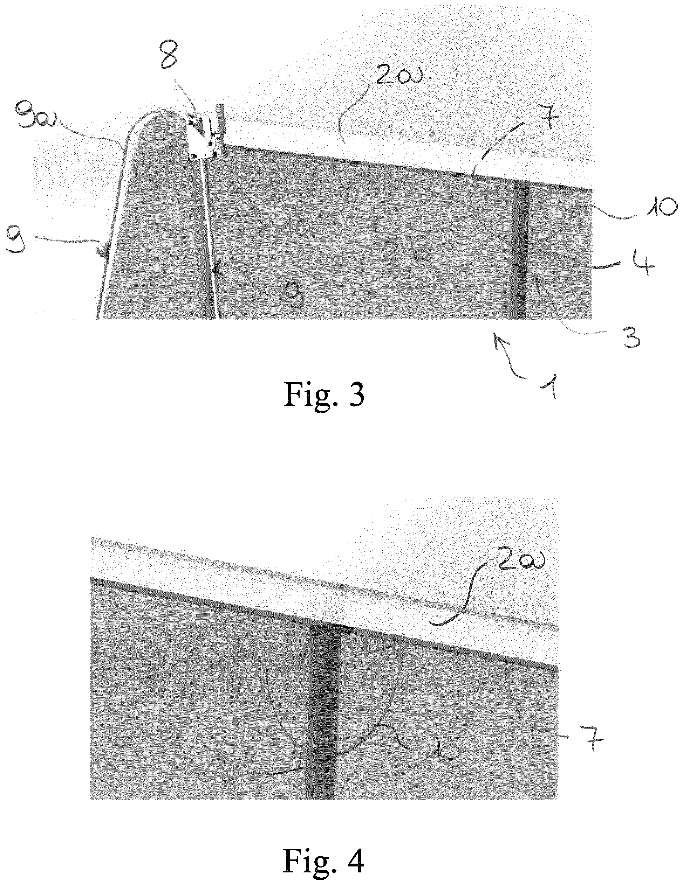

The protective structure 1 comprises driving means for reversibly moving the aforementioned first portion 2a of the protective covering element 2 between:
- a retracted configuration, in which said first portion 2a of said protective covering element 2 is collected in proximity to said upper bar 5 (see Figures 3 and 4) and
- an extended configuration in which said first portion 2a of said protective covering element 2 extends transverse to said longitudinal direction X-X from said upper bar 5 to proximity to the ground T (see Figure 1), so as to act, when used, as a protective element for the plants of the row under said upper bar 2.

Advantageously, the protective structure 1 also comprises a movable bar 7 positioned at a lower free longitudinal edge of said first portion 2a of the protective covering element 2, the passage of the aforementioned first portion 2a of the protective covering element 2 from the extended configuration to the retracted configuration, or vice versa, taking place by rolling said first portion 2a of the protective covering element 2 around the aforementioned movable bar 7, or vice versa by unrolling it from said movable bar 7.

It shall be noted that:
- the rolling of the first portion 2a of the protective covering element 2 around the aforementioned movable bar 7 causes said movable bar 7 to simultaneously move toward said upper bar 5 (see Figures 3 and 4), whereas
- the unrolling of the first portion 2a of the protective covering element 2 from the aforementioned movable bar 7 causes said movable bar to simultaneously move away from said upper bar 5, until the first portion 2a reaches the extended configuration in which the movable bar 7 is proximate to or in contact with the ground T.

Advantageously, the aforementioned driving means for driving the protective structure 1 comprise:
- a movable winch 8 having a rotor 8a kinematically connected in rotation with the movable bar 7 so that a rotation in one direction or in the opposite direction of said rotor corresponds to a corresponding rotation of said movable bar 7, and
- a substantially vertical guiding rod 9 which extends from an upper end 9a proximate to the upper bar 5 to a lower end 9b close to or fixed to the ground, said movable winch 8 being slidably coupled with said guiding rod 9 to be guided thereby during rolling or unrolling of the first portion 2a of the protective covering element 2 around the respective movable bar 7.

As a result, following a rotation of the movable winch 8 and the movable bar 7 rigidly joined thereto such as to cause a rolling or unrolling of the first portion 2a of the protective covering element 2 with respect to the movable bar 7, the movable winch 8 moves toward the upper end 9a of the aforementioned guiding rod 9 or, vice versa, toward the lower end 9b of said guiding rod 9.

According to the embodiment as shown in Figures 1 to 4, each movable bar 7 has a respective movable winch 8 at one of its opposite head ends.

Preferably, the protective structure 1 can protect both longitudinal sides of a row of plants, so that, for this purpose, the protective covering element 2 comprises a second portion 2b opposite and facing the aforementioned first portion 2a, extending longitudinally along the upper bar 5 and extending transversely from the upper bar 5 to proximity to the ground T, such second portion 2b of said protective covering element 2 being rolled in a first direction of rotation about a respective movable bar 7.

The movable bar 7 associated with the second portion 2b of the protective covering element 3 is also with a rotor 8a of a respective movable winch 8, said movable winch 8 being slidingly associated with a respective guiding rod 9 which extends from an upper end 9a)close to the upper bar 5 to a lower end 9b close to or fixed to the ground

Referring to the second portion 2b of the protective covering element 2 it shall be noted that the respective movable bar 7 has a respective movable winch 8, preferably located at one of its head ends, and two movable winches 8 may be also possibly provided, suitably spaced apart in the longitudinal direction.

In short, the first portion 2a and the second portion 2b of the protective covering element 2 define two respective and substantially identical protective portions having similar structures and driving means.

Therefore, as clearly shown in Figure 1, the protective covering element 2 defines a structure that is symmetrical with respect to the longitudinal axis X-X where the upper bar 5 is located, each longitudinal side being defined by a respective portion 2a,2b that can be operated and positioned individually and selectively with respect to the other portion.

Preferably, each movable bar 7 comprises a tubular steel element, preferably having a diameter between 1.8 cm and 5 cm, more preferably a diameter between 2 and 3 cm, so as to ensure the necessary torsional stiffness.

Preferably, each movable bar 7 is composed of a plurality of longitudinal sections rigidly end-connected to each other, for example by press-fit connections to be rigidly connected in rotation with each other. This can provide protective structures 1 whose longitudinal extent is as long as a hundred meters or more, by adapting them to the length of the row of plants to be protected.

Preferably, the supporting structure 3 comprises horizontal support elements 10 located proximate to the upper bar 5 to support the aforementioned portion 2a, and/or also the aforementioned portion 2b, of the protective covering element 2 in a retracted configuration with the respective movable bar 7 resting on such horizontal support elements 10.

According to the illustrated embodiment (see Figures 3 and 4), the aforementioned horizontal support elements 10 are supported by the vertical poles of the support structure 3 and are preferably defined by a steel wire appropriately shaped to identify support portions for the movable bars 7.

Preferably, the aforementioned movable winch 8 comprises an electric gearmotor for the rotation drive of the rotor 8a kinematically connected in rotation with a movable bar 7.

Preferably, the protective structure 1 also comprises an accumulator electrically wired to said electric gearmotor, or to each electric gearmotor, to supply it with voltage and current when it has to be rotatably driven.

Preferably, the aforementioned movable winch 8 or each movable winch (8) is slidably coupled with the aforementioned guiding rod 9 by means of a shape coupling between complementary profile sections which prevents rotation of said movable winch 8 around said guiding rod 9.

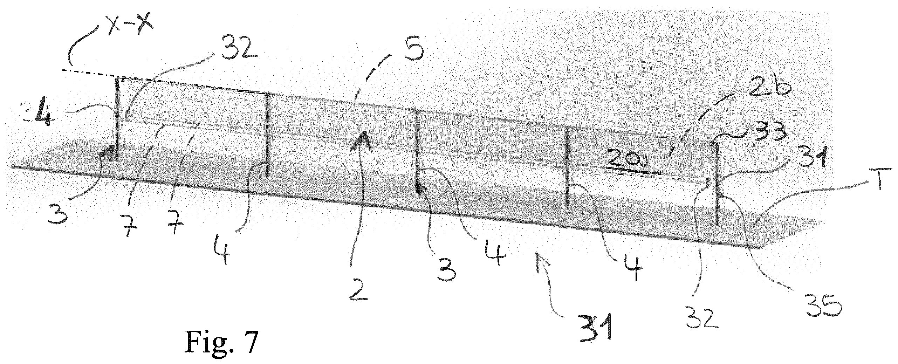

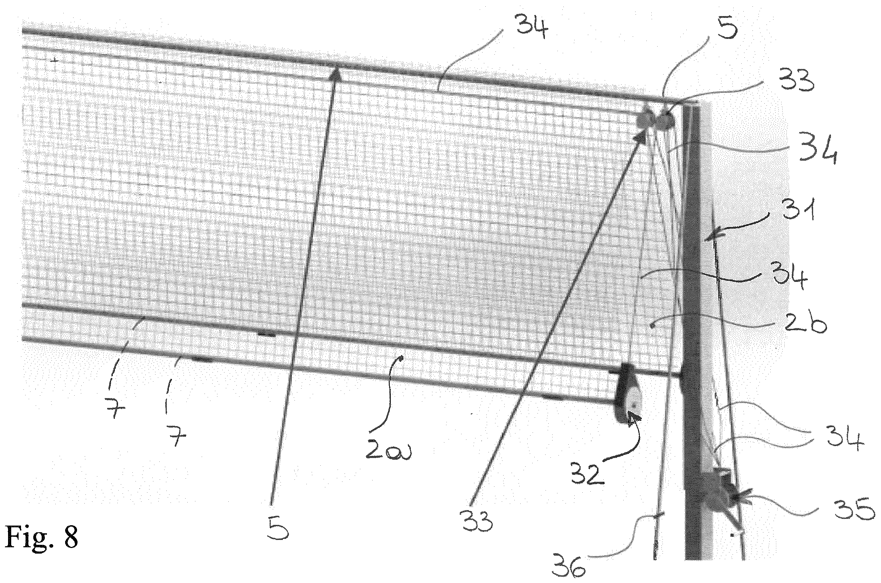

Referring to Figures 7 and 8, a second embodiment of a protective structure of the invention is generally designated by numeral 31, which differs from the above-described protective structure 1 in that it has a fixed winch instead of a movable winch, as well as return pulleys, cables and winding devices associated with movable sliders, as further explained below.

It should be noted that the parts of the protective structure 31 structurally and/or functionally corresponding to the parts of the protective structure 1 are designated by the same reference numerals and will not be further described, as the above description related to the protective structure 1 will be applicable.

In particular, the protective structure 31 comprises:
- a fixed winch 35 supported by a support pole 31, said fixed winch 35 comprising a rotating drum on which a cable 34 which can be rolled out or rolled up is wound;
- a winding device 32 comprising a cable winding pulley connected in rotation with the movable bar 7 associated with the first part 2a of the protective covering element 2 and
- return pulleys 33 for said cable 34 positioned between said fixed winch 35 and said winding pulley of said winding device 32 to define a sliding path for said cable 34 while it is rolled up or unrolled from the fixed winch 35.

When said first portion 2a of the protective covering element 2 is in the above retracted configuration, the first portion 2a of the protective covering element 2 of the protective structure 31 is rolled around the movable bar 7 in a first direction of rotation and said cable 34 that can be rolled up or unrolled from said fixed winch 35 is wound for a first portion on said winding pulley of the winding device 32 in a direction of rotation opposite to said first direction of rotation.

Said first portion of said cable 34 wound on said winding pulley of said winding device 32 has a length such as to be wound at least for a portion of a turn around said winding pulley of said winding device 32 when said first portion 2a of said protective covering element 2 is in said extended configuration.

Like the protective structure 1, the protective structure 31 also can protect both longitudinal sides of a row of plants, so that, for this purpose, the protective covering element 2 of the protective structure 31 comprises a second portion 2b opposite to and facing the aforementioned first portion 2a.

Said second portion 2b of the covering element 2 of the protective structure 31 extends longitudinally along the upper bar 5 and extends transversely from the upper bar 5 to proximity to the ground T.

Such second portion 2b of the covering element 2 of the protective structure 31 is rolled up in a first direction of rotation around a respective movable bar 7and said cable 34 that can be rolled up or unrolled from said fixed winch 35 is wound for a first portion on said winding pulley of the winding device 32 in a direction of rotation opposite to said first direction of rotation.

Said first portion of said cable 34 wound on said winding pulley of said winding device 32 has a length such as to be wound at least for a portion of a turn around said winding pulley of said winding device 32 when said second portion 2b of said protective covering element 2 of the protective structure 31 in the extended configuration.

The first portion 2a and the second portion 2b of the protective covering element 2 of the protective structure 31 define two respective and substantially identical protective portions having similar structures and driving means.

As shown in Figure 7, the protective covering element 2 of the protective structure 31 defines a structure that is symmetrical with respect to the longitudinal axis X-X where the upper bar 5 is located, each longitudinal side being defined by a respective portion 2a,2b.

Preferably, each movable bar 7 comprises at least two of said winding devices 32 longitudinally spaced apart from each other, the pulley of each of said winding devices 32 having wound thereupon a first portion of a cable 34 that can be unrolled or rolled from/on the fixed winch 35 of such a length as to be still wound at least for a portion of a turn around the winding pulley when the respective second portion 2a, 2b of the protective covering element 2 is in the aforementioned extended configuration.

Preferably, each movable bar 7 of the protective structure 31 comprises two of said winding devices 32 located at its opposite head end portions.

Preferably, for each winding device 32 of the protective structure 31 a separate cable 34 is provided that can be rolled up or unrolled from said fixed winch 35.

The protective structure 31 comprises a return pulley 33 for a cable 34 that can be rolled up or unrolled from the fixed winch 35 and is positioned:
- proximate to said upper bar 5 and
- on the vertical of each of said winding devices 32 and/or of said fixed winch 35.

Preferably, said support pole 31 of the fixed winch 35 is a head pole of the support structure 3 of the protective structure 31.

The aforementioned fixed winch 35 is preferably a manual winch, but a motorized winch may be also installed.

The support structure 3 may be equipped with tie rods 36 for fixation and stabilization purposes.

It will be appreciated from the above that the protective structure for rows of plants and the like of the present invention fulfills the above mentioned need and also obviates prior art drawbacks as set out in the introduction of this disclosure. That is, the protective system for rows of the invention can be deployed or folded in a few minutes without requiring considerable labor, the work of one person being sufficient to cover or uncover one or both longitudinal sides of a row of plants.

Thus, an operator will simply actuate, even remotely, the movable winches of the protection system 1 or the fixed winch of the protection system 31 to deploy or fold the protective covering element.

Also, due to the possibility of deploying or folding the protective covering element in a short time and without requiring much labor the protective covering element may be kept deployed only when actually needed, for example, in case of hailstorms, when the plants of the rows are to be shielded from the sun or are to be protected from parasites, insects and the like.

One more advantage of the protective structure for rows of plants and the like according to the present invention is the possibility of adapting the length thereof to the actual length of the row of plants to be protected.

Yet another advantage of the protective structure for rows of plants and the like according to the present invention is its simple structure and the possibility of being used for a long time without causing failures or the like.

Those skilled in the art will obviously appreciate that a number of changes and variants may be made to the protective structure for rows of plants and the like as described hereinbefore, in response to specific requirements, without departure from the scope of the invention, as defined in the following claims.

Thus, for example, each movable bar may comprise multiple movable winches suitably spaced apart from each other along a movable bar, such arrangement being suitable for rows of considerable length.

According to an embodiment that is not shown, the movable winch comprises:
- a releasable clamp, or other equivalent fastening means, for slidingly securing the body of the movable winch to the guiding rod and
- a chuck for rotatably engaging the movable bar of one side of a row,
whereby the movable winch can be easily and quickly moved between rows and between opposite sides of the same row, with the protective covering elements of the various rows being successively moved using a single movable winch.

## Claims

1. **A protective structure (1; 31) for rows of plants and the like,** comprising a flexible covering protective element (2) and a supporting structure (3) for supporting said covering protective element (2) above and along the sides of a row of plants to protect, wherein:
- said support structure (3) comprises a plurality of support poles (4) to support at a predetermined height from the ground (T) at least an upper bar (5) extended along a prevalent longitudinal direction (X-X), in use said upper bar (5) being intended to be extended along the row of plants to be protected and above the tops of the plants to be protected;
- said protective covering element (2) comprises a first portion (2a) which extends longitudinally along said upper bar (5) and transversely from said upper bar (5) until it reaches the ground (T);
- said protective structure (1; 31) comprises driving means for reversibly moving said first portion (2a) of said protective covering element (2) between:
• a retracted configuration, wherein said first portion (2a) of said protective covering element (2) is collected in proximity to said upper bar (5) and
• an extended configuration wherein said first portion (2a) of said protective covering element (2) extends transversely to said longitudinal direction from said upper bar (5) up close to the ground (T), so as to act, when used, as protective element of the plants of the row positioned under said upper bar (2);
- said protective structure (1; 31) also comprises a movable bar (7) positioned in correspondence with a lower free longitudinal edge of said first portion (2a) of said protective covering element (2);
- the passage of said first portion (2a) of said protective covering element (2) from said extended configuration to said retracted configuration, or vice versa, takes place by rolling said first portion (2a) of said protective covering element (2) around said movable bar (7), or vice versa unrolling it from said movable bar (7);
- the rolling of said first portion (2a) of said protective covering element (2) around said movable bar (7) determines a simultaneous approach of said movable bar (7) towards said upper bar (5) and
- the unrolling of said first portion (2a) of said protective covering element (2) from said movable bar (7) causes a simultaneous removal of said movable bar from said upper bar (5),
**characterized in that:**
**I)**
- said protective structure (1) comprises a mobile winch (8) having a rotor (8a) kinematically connected in rotation with said movable bar (7) so that a rotation in one direction or in the opposite direction of said rotor corresponds to a corresponding rotation of said movable bar (7);
- said support structure (3) comprises a substantially vertical guiding rod (9) which extends from an upper end (9a) close to said upper bar (5) to a lower end (9b) close to or fixed to the ground and
- said mobile winch (8) is slidingly coupled with said guiding rod (9) to be guided by said guiding rod (9) during the rolling or unrolling of said first portion (2a) of said protective covering element (2),
so that following a rotation of said movable winch (8) and said movable bar (7) such as to cause a rolling or unrolling of said first portion (2a) of said protective covering element (2) with respect to said movable bar (7), said mobile winch (8) moves towards said upper end (9a) of said guiding rod (9) or, vice versa, towards said lower end (9b) of said guiding rod (9)
**or alternatively**
**II)**
said protective structure (31) comprises:
- a fixed winch (35) supported by a support pole (31), said winch (35) comprises a rotating drum on which a cable (34) which can be rolled out or rolled up is wound;
- a winding device (32) comprising a cable winding pulley connected in rotation with said movable bar (7) and
- return pulleys (33) for said cable (34) between said fixed winch (35) and said winding pulley of said winding device (32), wherein
- when said first portion (2a) of said protective covering element (2) is in said retracted configuration, said first portion (2a) of said protective covering element (2) is rolled around said movable bar (7) with a first direction of rotation and said cable (34) is wound for a first length on said winding pulley of said winding device (32) with a direction of rotation opposite to said first direction of rotation and
- said first portion of said cable (34) wound on said winding pulley of said winding device (32) has a length such as to be wound at least for a portion of the turn around said winding pulley of said winding device (32) when said first portion (2a) of said protective covering element (2) is in said extended configuration.

2. A protective structure (1; 31) according to claim 1, wherein:
- said protective covering element (2) comprises a second portion (2b) opposite and facing said first portion (2a), extended longitudinally along said upper bar (5) and extended transversely from said upper bar (5) until it reaches proximity to the ground (T);
- said second portion (2b) of said protective covering element (2) is rolled up with a first direction of rotation around a respective movable bar (7), said movable bar (7) being:
**I)** integrally connected in rotation with a rotor of a respective mobile winch (8), said mobile winch (8) being slidingly associated with a respective guiding rod (9) which extends from an upper end (9a) close to said upper bar (5) to a lower end (9b) close to or fixed to the ground or alternatively
**II)** integrally connected in rotation with a cable winding pulley of a respective winding device (32) on which a first portion of a cable (34) which can be rolled up or unrolled from said first direction of rotation is wound with a direction of rotation opposite to said first direction of rotation fixed winch (35), said first wound section of said cable (34) having a length such as to be wound at least for a portion of the turn around said winding pulley of said respective winding device (32) when said second portion (2b) of said protective covering element (2) is in said extended configuration.

3. A protective structure (1; 31) according to claim 1 or 2, wherein said protective covering element (2) consists of a net and/or a film, preferably of plastic material.

4. A protective structure (1; 31) according to any one of claims 1 to 3, wherein each movable bar (7) comprises a tubular steel element, preferably having a diameter between 1.8 cm and 5 cm, more preferably having a diameter between 2 and 3 cm, so as to ensure the necessary torsional stiffness.

5. A protective structure (1; 31) in accordance with any one of claims 1 to 4, wherein each movable bar is composed of a plurality of longitudinal sections rigidly end-connected to each other to be integral in rotation with each other.

6. A protective structure (1; 31) according to any one of claims 1 to 5, wherein said support structure (3) comprises horizontal support elements (10) positioned in proximity to said upper bar (5) to support said element protective cover (2) with the respective movable bar (7) in said retracted configuration.

7. A protective structure (1) according to any one of claims 1 to 6, wherein said movable winch (8) is positioned at a head end of each movable bar (7).

8. A protective structure (1) according to any one of claims 1 to 7, wherein said movable winch (8) comprises an electric gearmotor for the rotation drive of the rotor kinematically connected in rotation with said movable bar (7), preferably said protective structure (1) comprises an accumulator electrically wired to said electric gearmotor to power it.

9. A protective structure (1) according to any one of claims 1 to 8, wherein said mobile winch (8) is slidably coupled with said guiding rod (9) by means of a shape coupling between complementary profile sections which prevents rotation of said mobile winch (8) around said guiding rod (9).

10. A protective structure (31) according to any one of claims 1 to 6, wherein each movable bar (7) comprises at least two of said winding devices (32) spaced from each other in said longitudinal direction, wherein on the pulley of each of said winding devices (32) a first section of a cable (34) which can be unwound or re-rolled by said fixed winch (35) is wound, said first section of wound cable having a length such that said cable (34) is still wound at least for a portion of the turn around the respective winding pulley of the winding device (32) when said first portion (2a) of said protective covering element (2) is in said extended configuration.

11. A protective structure (31) according to claim 10, wherein each movable bar (7) comprises two of said winding devices (32) positioned at the opposite head ends.

12. A protective structure (31) according to any one of claims 1 to 6 or 10 to 11, comprising a return pulley (33) for said cable (34) positioned:
- in proximity of said upper bar (5) and
- on the vertical of each of said winding devices (32) and/or of said fixed winch (35).

13. A protective structure (31) according to any one of claims 1 to 6 or 10 to 12, wherein said support pole (31) of said fixed winch (35) is an end pole of said support structure (3).

14. A protective structure (31) according to any one of claims 1 to 6 or 10 to 13, wherein said fixed winch (35) is a manual winch or a motorized winch.

## Patentansprüche

1. **Schutzstruktur (1; 31) für Pflanzenreihen und dergleichen,** mit einem flexiblen abdeckenden Schutzelement (2) und einer Stützstruktur (3) zum Stützen des abdeckenden Schutzelements (2) über und entlang der Seiten einer zu schützenden Pflanzenreihe, wobei:
- die Stützstruktur (3) eine Vielzahl von Stützpfosten (4) umfasst, um in einer vorbestimmten Höhe vom Boden (T) mindestens eine obere Stange (5) zu stützen, die sich entlang einer vorherrschenden Längsrichtung (X X) erstreckt, wobei die obere Stange (5) im Gebrauch dazu bestimmt ist, sich entlang der zu schützenden Pflanzenreihe und über die Spitzen der zu schützenden Pflanzen zu erstrecken;
- das abdeckende Schutzelement (2) einen ersten Abschnitt (2a) umfasst, der sich in Längsrichtung entlang der oberen Stange (5) und in Querrichtung von der oberen Stange (5) bis zum Boden (T) erstreckt;
- die Schutzstruktur (1; 31) Antriebsmittel umfasst, um den ersten Abschnitt (2a) des abdeckenden Schutzelements (2) reversibel zu bewegen zwischen:
• einer eingezogenen Konfiguration, in der der erste Abschnitt (2a) des abdeckenden Schutzelements (2) in der Nähe der oberen Stange (5) gesammelt ist, und
• einer ausgezogenen Konfiguration, in der sich der erste Abschnitt (2a) des abdeckenden Schutzelements (2) quer zur Längsrichtung von der oberen Stange (5) bis nahe an den Boden (T) erstreckt, um im Gebrauch als Schutzelement für die Pflanzen der unter der oberen Stange (2) angeordneten Reihe zu wirken;
- die Schutzstruktur (1; 31) auch eine bewegliche Stange (7) umfasst, die in Übereinstimmung mit einer unteren freien Längskante des ersten Abschnitts (2a) des abdeckenden Schutzelements (2) angeordnet ist;
- der Übergang des ersten Abschnitts (2a) des abdeckenden Schutzelements (2) von der ausgezogenen Konfiguration in die eingezogene Konfiguration oder umgekehrt durch Aufrollen des ersten Abschnitts (2a) des abdeckenden Schutzelements (2) um die bewegliche Stange (7) oder umgekehrt durch Abrollen von der beweglichen Stange (7) erfolgt;
- das Aufrollen des ersten Abschnitts (2a) des abdeckenden Schutzelements (2) um die bewegliche Stange (7) eine gleichzeitige Annäherung der beweglichen Stange (7) an die obere Stange (5) bewirkt und
- das Abrollen des ersten Abschnitts (2a) des abdeckenden Schutzelements (2) von der beweglichen Stange (7) ein gleichzeitiges Entfernen der beweglichen Stange von der oberen Stange (5) bewirkt,
**dadurch gekennzeichnet, dass:**
**I)**
- die Schutzstruktur (1) eine bewegliche Winde (8) mit einem Rotor (8a) umfasst, der kinematisch drehbar mit der beweglichen Stange (7) verbunden ist, so dass eine Drehung des Rotors in eine Richtung oder in die entgegengesetzte Richtung einer entsprechenden Drehung der beweglichen Stange (7) entspricht;
- die Stützstruktur (3) eine im Wesentlichen vertikale Führungsstange (9) umfasst, die sich von einem oberen Ende (9a) in der Nähe der oberen Stange (5) zu einem unteren Ende (9b) in der Nähe des Bodens oder an diesem befestigt erstreckt und
- die bewegliche Winde (8) gleitend mit der Führungsstange (9) gekoppelt ist, um während des Auf- oder Abrollens des ersten Abschnitts (2a) des abdeckenden Schutzelements (2) von der Führungsstange (9) geführt zu werden,
so dass sich die bewegliche Winde (8), einer Drehung der beweglichen Winde (8) und der beweglichen Stange (7) folgend, die ein Auf- oder Abrollen des ersten Abschnitts (2a) des abdeckenden Schutzelements (2) in Bezug auf die bewegliche Stange (7) bewirkt, zum oberen Ende (9a) der Führungsstange (9) oder umgekehrt zum unteren Ende (9b) der Führungsstange (9) bewegt
**oder alternativ**
**II)**
die Schutzstruktur (31) umfasst:
- eine feststehende Winde (35), die von einem Stützpfosten (31) gestützt wird, wobei die Winde (35) eine rotierende Trommel umfasst, auf der ein ab- oder aufrollbares Seil (34) aufgewickelt ist;
- eine Aufwickelvorrichtung (32) mit einer Seilaufwickelrolle, die drehbar mit der beweglichen Stange (7) verbunden ist, und
- Umlenkrollen (33) für das Seil (34) zwischen der feststehenden Winde (35) und der Wickelrolle der Aufwickelvorrichtung (32),
wobei
- wenn sich der erste Abschnitt (2a) des abdeckenden Schutzelements (2) in der eingezogenen Konfiguration befindet, der erste Abschnitt (2a) des abdeckenden Schutzelements (2) mit einer ersten Drehrichtung um die bewegliche Stange (7) gerollt wird und das Seil (34) mit einer der ersten Drehrichtung entgegengesetzten Drehrichtung für eine erste Länge auf die Wickelrolle der Aufwickelvorrichtung (32) gewickelt wird und
- der erste Abschnitt des auf die Wickelrolle der Aufwickelvorrichtung (32) gewickelten Seils (34) eine solche Länge aufweist, dass er mindestens für einen Teil der Umdrehung um die Wickelrolle der Aufwickelvorrichtung (32) gewickelt wird, wenn sich der erste Abschnitt (2a) des abdeckenden Schutzelements (2) in der ausgezogenen Konfiguration befindet.

2. Schutzstruktur (1; 31) nach Anspruch 1, wobei:
- das abdeckende Schutzelement (2) einen zweiten Abschnitt (2b) umfasst, der dem ersten Abschnitt (2a) gegenüberliegt und sich in Längsrichtung entlang der oberen Stange (5) erstreckt und sich quer von der oberen Stange (5) bis in die Nähe des Bodens (T) erstreckt;
- der zweite Abschnitt (2b) des abdeckenden Schutzelements (2) mit einer ersten Drehrichtung um eine entsprechende bewegliche Stange (7) aufgerollt wird, wobei die bewegliche Stange (7):
**I)** drehfest mit einem Rotor einer entsprechenden beweglichen Winde (8) verbunden ist, wobei die bewegliche Winde (8) gleitend mit einer entsprechenden Führungsstange (9) verbunden ist, die sich von einem oberen Ende (9a) in der Nähe der oberen Stange (5) zu einem unteren Ende (9b) in der Nähe des Bodens oder an diesem befestigt erstreckt, oder alternativ
**II)** drehfest mit einer Seilwickelrolle einer jeweiligen Aufwickelvorrichtung (32) verbunden ist, auf der ein erster Abschnitt eines Seils (34), das aus der ersten Drehrichtung auf- oder abgerollt werden kann, mit einer Drehrichtung entgegengesetzt zur ersten Drehrichtung der feststehenden Winde (35) aufgewickelt ist, wobei der erste aufgewickelte Abschnitt des Seils eine solche Länge aufweist, dass er mindestens für einen Abschnitt der Umdrehung um die Wickelrolle der jeweiligen Aufwickelvorrichtung (32) gewickelt wird, wenn sich der zweite Abschnitt (2b) des abdeckenden Schutzelements (2) in der ausgezogenen Konfiguration befindet.

3. Schutzstruktur (1; 31) nach Anspruch 1 oder 2, wobei das abdeckende Schutzelement (2) aus einem Netz und/oder einer Folie, vorzugsweise aus Kunststoff, besteht.

4. Schutzvorrichtung (1; 31) nach einem der Ansprüche 1 bis 3, wobei jede bewegliche Stange (7) ein rohrförmiges Stahlelement, vorzugsweise mit einem Durchmesser zwischen 1,8 cm und 5 cm, noch bevorzugter mit einem Durchmesser zwischen 2 und 3 cm, umfasst, um die erforderliche Torsionssteifigkeit zu gewährleisten.

5. Schutzstruktur (1; 31) nach einem der Ansprüche 1 bis 4, wobei jede bewegliche Stange aus einer Vielzahl von Längsabschnitten besteht, die an den Enden starr miteinander verbunden sind, so dass sie drehfest miteinander verbunden sind.

6. Schutzstruktur (1; 31) nach einem der Ansprüche 1 bis 5, wobei die Stützstruktur (3) horizontale Stützelemente (10) umfasst, die in der Nähe der oberen Stange (5) angeordnet sind, um das abdeckende Schutzelement (2) mit der jeweiligen beweglichen Stange (7) in der eingezogenen Konfiguration zu stützen.

7. Schutzstruktur (1) nach einem der Ansprüche 1 bis 6, wobei die bewegliche Winde (8) an einem Kopfende jeder beweglichen Stange (7) angeordnet ist.

8. Schutzstruktur (1) nach einem der Ansprüche 1 bis 7, wobei die bewegliche Winde (8) einen elektrischen Getriebemotor für den Drehantrieb des Rotors umfasst, der kinematisch drehbar mit der beweglichen Stange (7) verbunden ist, wobei die Schutzvorrichtung (1) vorzugsweise einen Akkumulator umfasst, der elektrisch mit dem elektrischen Getriebemotor verbunden ist, um diesen zu betreiben.

9. Schutzstruktur (1) nach einem der Ansprüche 1 bis 8, wobei die bewegliche Winde (8) mit der Führungsstange (9) mittels einer Formkopplung zwischen komplementären Profilabschnitten gleitend gekoppelt ist, die eine Drehung der beweglichen Winde (8) um die Führungsstange (9) verhindert.

10. Schutzstruktur (31) nach einem der Ansprüche 1 bis 6, wobei jede bewegliche Stange (7) mindestens zwei der Aufwickelvorrichtungen (32) umfasst, die in der Längsrichtung voneinander beabstandet sind, wobei auf der Rolle jeder der Aufwickelvorrichtungen (32) ein erster Abschnitt eines Seils (34) aufgewickelt ist, das von der feststehenden Winde (35) abgewickelt oder aufgerollt werden kann, wobei der erste Abschnitt des aufgewickelten Seils eine solche Länge aufweist, dass das Seil (34) mindestens noch zu einem Teil der Umdrehung um die jeweilige Wickelrolle der Aufwickelvorrichtung (32) aufgewickelt ist, wenn sich der erste Abschnitt (2a) des abdeckenden Schutzelements (2) in der ausgezogenen Konfiguration befindet.

11. Schutzstruktur (31) nach Anspruch 10, wobei jede bewegliche Stange (7) zwei der Aufwickelvorrichtungen (32) umfasst, die an den gegenüberliegenden Kopfenden angeordnet sind.

12. Schutzstruktur (31) nach einem der Ansprüche 1 bis 6 oder 10 bis 11, umfassend eine Umlenkrolle (33) für das Seil (34), die:
- in der Nähe der oberen Stange (5) und
- auf der Vertikalen jeder der Aufwickelvorrichtungen (32) und/oder der feststehenden Winde (35) angeordnet ist.

13. Schutzstruktur (31) nach einem der Ansprüche 1 bis 6 oder 10 bis 12, wobei der Stützpfosten (31) der feststehenden Winde (35) ein Endpfosten der Stützstruktur (3) ist.

14. Schutzstruktur (31) nach einem der Ansprüche 1 bis 6 oder 10 bis 13, wobei die feststehende Winde (35) eine manuelle Winde oder eine motorisierte Winde ist.

## Revendications

1. **Structure de protection (1 ; 31) pour rangées de plantes et analogues,** comprenant un élément de couverture de protection flexible (2) et une structure de support (3) pour supporter ledit élément de couverture de protection (2) au-dessus et le long des côtés d'une rangée de plantes à protéger, dans laquelle :
- ladite structure de support (3) comprend une pluralité de poteaux de support (4) pour supporter à une hauteur prédéterminée du sol (T) au moins une barre supérieure (5) étendue le long d'une direction longitudinale prévalente (X-X), ladite barre supérieure (5) étant destinée en utilisation à être étendue le long de la rangée de plantes à protéger et au-dessus des sommets des plantes à protéger ;
- ledit élément de couverture de protection (2) comprend une première partie (2a) qui s'étend longitudinalement le long de ladite barre supérieure (5) et transversalement à partir de ladite barre supérieure (5) jusqu'à ce qu'elle atteigne le sol (T) ;
- ladite structure de protection (1 ; 31) comprend un moyen d'entraînement pour déplacer de manière réversible ladite première partie (2a) dudit élément de couverture de protection (2) entre :
• une configuration rétractée, dans laquelle ladite première partie (2a) dudit élément de couverture de protection (2) est recueillie à proximité de ladite barre supérieure (5) et
• une configuration étendue dans laquelle ladite première partie (2a) dudit élément de couverture de protection (2) s'étend transversalement à ladite direction longitudinale depuis ladite barre supérieure (5) jusqu'à proximité du sol (T), de manière à agir, lorsqu'elle est utilisée, comme élément de protection des plantes de la rangée positionnée sous ladite barre supérieure (2) ;
- ladite structure de protection (1 ; 31) comprend également une barre mobile (7) positionnée en correspondance avec un bord longitudinal libre inférieur de ladite première partie (2a) dudit élément de couverture de protection (2) ;
- le passage de ladite première partie (2a) dudit élément de couverture de protection (2) de ladite configuration étendue à ladite configuration rétractée, ou inversement, s'effectue en enroulant ladite première partie (2a) dudit élément de couverture de protection (2) autour de ladite barre mobile (7), ou inversement en la déroulant de ladite barre mobile (7) ;
- l'enroulement de ladite première partie (2a) dudit élément de couverture de protection (2) autour de ladite barre mobile (7) détermine une approche simultanée de ladite barre mobile (7) vers ladite barre supérieure (5) et
- le déroulement de ladite première partie (2a) dudit élément de couverture de protection (2) de ladite barre mobile (7) entraîne un retrait simultané de ladite barre mobile de ladite barre supérieure (5),
**caractérisée en ce que** :
**I)**
- ladite structure de protection (1) comprend un treuil mobile (8) ayant un rotor (8a) cinématiquement lié en rotation avec ladite barre mobile (7) de sorte qu'une rotation dans un sens ou dans le sens opposé dudit rotor corresponde à une rotation correspondante de ladite barre mobile (7) ;
- ladite structure de support (3) comprend une tige de guidage sensiblement verticale (9) qui s'étend d'une extrémité supérieure (9a) proche de ladite barre supérieure (5) à une extrémité inférieure (9b) proche du sol ou fixée à celui-ci et
- ledit treuil mobile (8) est couplé de manière coulissante avec ladite tige de guidage (9) pour être guidé par ladite tige de guidage (9) pendant l'enroulement ou le déroulement de ladite première partie (2a) dudit élément de couverture de protection (2),
de sorte que suite à une rotation dudit treuil mobile (8) et de ladite barre mobile (7) de manière à provoquer un enroulement ou un déroulement de ladite première partie (2a) dudit élément de couverture de protection (2) par rapport à ladite barre mobile (7), ledit treuil mobile (8) se déplace vers ladite extrémité supérieure (9a) de ladite tige de guidage (9) ou, inversement, vers ladite extrémité inférieure (9b) de ladite tige de guidage (9)
**ou alternativement**
**II)**
ladite structure de protection (31) comprend :
- un treuil fixe (35) supporté par un poteau de support (31), ledit treuil (35) comprend un tambour rotatif sur lequel s'enroule un câble (34) qui peut être déroulé ou enroulé ;
- un dispositif d'enroulement (32) comprenant une poulie d'enroulement du câble reliée en rotation à ladite barre mobile (7) et
- des poulies de renvoi (33) pour ledit câble (34) entre ledit treuil fixe (35) et ladite poulie d'enroulement dudit dispositif d'enroulement (32), dans laquelle
- lorsque ladite première partie (2a) dudit élément de couverture de protection (2) est dans ladite configuration rétractée, ladite première partie (2a) dudit élément de couverture de protection (2) est enroulée autour de ladite barre mobile (7) avec un premier sens de rotation et ledit câble (34) est enroulé sur une première longueur sur ladite poulie d'enroulement dudit dispositif d'enroulement (32) avec un sens de rotation opposé audit premier sens de rotation et
- ladite première partie dudit câble (34) enroulé sur ladite poulie d'enroulement dudit dispositif d'enroulement (32) a une longueur telle qu'elle est enroulée au moins pour une partie du tour autour de ladite poulie d'enroulement dudit dispositif d'enroulement (32) lorsque ladite première partie (2a) dudit élément de couverture de protection (2) est dans ladite configuration étendue.

2. Structure de protection (1 ; 31) selon la revendication 1, dans laquelle :
- ledit élément de couverture de protection (2) comprend une seconde partie (2b) opposée et faisant face à la première partie (2a), étendue longitudinalement le long de ladite barre supérieure (5) et étendue transversalement à partir de ladite barre supérieure (5) jusqu'à ce qu'elle atteigne la proximité du sol (T) ;
- ladite seconde partie (2b) dudit élément de couverture de protection (2) est enroulée dans un premier sens de rotation autour d'une barre mobile (7) respective, ladite barre mobile (7) étant :
**I)** intégralement reliée en rotation à un rotor d'un treuil mobile (8) respectif, ledit treuil mobile (8) étant associé de manière coulissante à une tige de guidage (9) respective qui s'étend d'une extrémité supérieure (9a) proche de ladite barre supérieure (5) à une extrémité inférieure (9b) proche du sol ou fixée à celui-ci, ou alternativement
**II)** intégralement relié en rotation à une poulie d'enroulement de câble d'un dispositif d'enroulement (32) respectif sur lequel une première partie d'un câble (34) qui peut être enroulé ou déroulé à partir dudit premier sens de rotation est enroulée avec un sens de rotation opposé audit premier sens de rotation du treuil fixe (35), ladite première section enroulée dudit câble (34) ayant une longueur telle qu'elle est enroulée au moins pour une partie du tour autour de ladite poulie d'enroulement dudit dispositif d'enroulement (32) respectif lorsque ladite seconde partie (2b) dudit élément de couverture de protection (2) est dans ladite configuration étendue.

3. Structure de protection (1 ; 31) selon la revendication 1 ou 2, dans laquelle l'élément de couverture de protection (2) consiste en un filet et/ou un film, de préférence en matière plastique.

4. Structure de protection (1 ; 31) selon l'une quelconque des revendications 1 à 3, dans laquelle chaque barre mobile (7) comprend un élément tubulaire en acier, ayant de préférence un diamètre compris entre 1,8 cm et 5 cm, de manière davantage préférée ayant un diamètre compris entre 2 et 3 cm, afin d'assurer la rigidité en torsion nécessaire.

5. Structure de protection (1 ; 31) selon l'une quelconque des revendications 1 à 4, dans laquelle chaque barre mobile est composée d'une pluralité de sections longitudinales reliées entre elles par une extrémité rigide pour être solidaires en rotation les unes par rapport aux autres.

6. Structure de protection (1 ; 31) selon l'une quelconque des revendications 1 à 5, dans laquelle ladite structure de support (3) comprend des éléments de support horizontaux (10) positionnés à proximité de ladite barre supérieure (5) pour supporter ledit élément de couverture de protection (2) avec la barre mobile (7) respective dans ladite configuration rétractée.

7. Structure de protection (1) selon l'une quelconque des revendications 1 à 6, dans laquelle le treuil mobile (8) est placé à l'extrémité de chaque barre mobile (7).

8. Structure de protection (1) selon l'une quelconque des revendications 1 à 7, dans laquelle ledit treuil mobile (8) comprend un motoréducteur électrique pour l'entraînement en rotation du rotor cinématiquement lié en rotation avec ladite barre mobile (7), de préférence ladite structure de protection (1) comprend un accumulateur électriquement câblé audit motoréducteur électrique pour l'alimenter.

9. Structure de protection (1) selon l'une quelconque des revendications 1 à 8, dans laquelle ledit treuil mobile (8) est couplé de manière coulissante avec ladite tige de guidage (9) au moyen d'un couplage de forme entre des sections de profil complémentaires qui empêche la rotation dudit treuil mobile (8) autour de ladite tige de guidage (9).

10. Structure de protection (31) selon l'une quelconque des revendications 1 à 6, dans laquelle chaque barre mobile (7) comprend au moins deux desdits dispositifs d'enroulement (32) espacés l'un de l'autre dans ladite direction longitudinale, dans laquelle une première section d'un câble (34) pouvant être déroulé ou réenroulé par ledit treuil fixe (35) est enroulée sur la poulie de chacun desdits dispositifs d'enroulement (32), ladite première section de câble enroulé ayant une longueur telle que ledit câble (34) est encore enroulé au moins pour une partie du tour autour de la poulie d'enroulement respective du dispositif d'enroulement (32) lorsque ladite première partie (2a) dudit élément de couverture de protection (2) se trouve dans ladite configuration étendue.

11. Structure de protection (31) selon la revendication 10, dans laquelle chaque barre mobile (7) comprend deux de ces dispositifs d'enroulement (32) positionnés aux extrémités opposées de la tête.

12. Structure de protection (31) selon l'une quelconque des revendications 1 à 6 ou 10 à 11, comprenant une poulie de renvoi (33) pour ledit câble (34) positionné :
- à proximité de ladite barre supérieure (5) et
- sur la verticale de chacun desdits dispositifs d'enroulement (32) et/ou dudit treuil fixe (35).

13. Structure de protection (31) selon l'une quelconque des revendications 1 à 6 ou 10 à 12, dans laquelle le poteau de support (31) du treuil fixe (35) est un poteau d'extrémité de ladite structure de support (3).

14. Structure de protection (31) selon l'une quelconque des revendications 1 à 6 ou 10 à 13, dans laquelle le treuil fixe (35) est un treuil manuel ou un treuil motorisé.
